# EUROPEAN PATENT APPLICATION

(11) **EP 4 190 560 A1**
(43) Date of publication of application: **07.06.2023**
(21) Application number: 21211771.7
(22) Date of filing: 01.12.2021
(51) Int. Cl.: B32B 38/06, B32B 37/20

(54) **A LINE FOR MAKING AN EMBOSSED-IN-REGISTER SHEET PRODUCT**

(71) Applicant: Rodolfo Comerio Srl, 21058 Solbiate Olona (VA) (IT)
(72) Inventor: COMERIO, Carlo, 21058 Solbiate Olona (VA) (IT)
(74) Representative: M. Zardi & Co S.A.

(57) **Abstract**

A laminating and embossing line for the production of an embossed-in register (EIR) sheet product with a continuous laminating process, the line comprising a lacquering section (4) which is arranged in-line downstream a sheet unwinding section and upstream a sheet laminating section, for lacquering a top sheet (13) of the sheet product before embossing, and further comprising sections for application, after embossing, of a primer on the back surface of the sheet product and/or of a protective film over the top surface of the product.

## Description

### Field of application

The invention concerns a laminating-embossing line adapted for continuous production of a sheet product with registered embossing.

### Prior art

The term embossed-in-register (EIR) sheet product denotes a product in the form of a sheet, typically made of two or more layers, having an embossed surface which precisely matches a printed image or pattern. The combination of a high quality print and registered embossing provides an appearance very similar to natural and expensive materials like wood for example. Accordingly such products are of great interest for the production of floor coverings or decorative panels.

A sheet product is made from two or more component sheets. The sheet components may include for example a base layer, a printed layer and a transparent top layer. Alternatively, the print can be made on the reverse surface of the transparent layer. The component sheets may be made of PVC or other suitable materials. Based on the materials, the product sheet may be extensible or not. The thickness of the sheet product typically ranges from a few hundreds of microns, such as 0.5 mm, to around 1.0-1.5 mm.

In a so-called laminating and embossing line for continuous production, the component sheets are laminated together to form a multi-layer sheet product and the so obtained sheet product is embossed by passing in a small gap between an embossing cylinder with a suitably engraved surface and a counter-cylinder (pressure cylinder). This technique is also named roll embossing. The main advantage of such lines is their ability to operate continuously thus having a greater capacity compared to a batch (intermittent) system wherein panels of the sheet material are cut and individually embossed in a press. However, a roll embossing line requires a careful alignment of the embossing cylinder relative to the product.

There are various techniques to maintain a proper alignment of the engraved cylinder relative to the running sheet product. For example suitable techniques for continuous registered embossing are described in EP 2 447 064 and EP 2 636 524. Generally, the known techniques are based on sensing the position of the engraved cylinder and of suitable reference marks of the product, and adjusting the position of the cylinder when needed, or providing a controlled stretch of the sheet product to restore synchronicity with the cylinder.

As stated above, a sheet product with registered embossing may provide a high degree of finishing. However the industry demands for continuous improvements, for example a special surface finish like opaque or silk-effect may be required. Also, in some cases the product needs be customized for special uses. In the current art the provision of special finishing or customization is performed off the laminating line in separate units, so the advantage of high productivity and high speed is partially lost. Additionally, performing part of the production process separately requires transferring the product and setting up the related machines, which is time consuming and may affect precision and quality. The use of separate machines increases the waste product connected to the replacement of respective reels.

Accordingly, there is still the need to improve the technique of the industrial lines for the continuous manufacturing of EIR sheet products.

### Summary of the invention

The aim of the invention is to provide a laminating and embossing line adapted to produce an embossed in register sheet product with increased flexibility, particularly adapted to provide on-demand special finishing of the product without reducing the high capacity and speed of production which is typical of continuous laminating lines.

This aim is reached with a laminating and embossing line according to claim 1.

The line is adapted for performing the lamination of two or more sheets which are joined together to form a sheet product, and further adapted to perform embossing of the so obtained sheet product. The lamination step is performed continuously by passing the sheets to be laminated through a gap between one or more pairs of cylinders. Also the embossing step is performed continuously by passing the sheet product between a suitable pair of cylinders including an embossing cylinder and a counter cylinder.

The laminating and embossing line of the invention comprises: an unwinding section for unwinding the component sheets which make the sheet product; a laminating section configured to laminate said component sheets forming a sheet product; a continuous in-register embossing section. The line further comprises a lacquering section which is arranged in-line downstream the unwinding section and upstream the laminating section, and is configured to apply a lacquer on said top sheet before it is laminated to other sheets to form said sheet product.

The lacquering section is arranged in-line so that, when required, the lacquering process can be performed continuously and is fully integrated with the overall manufacturing process of the sheet product.

Optionally, a line according to the invention may be further equipped with a primer application section and/or with a section for the application of a protective film, after embossing. These further sections are also integrated in the line so that they can operate continuously when required.

Hence the invention provides a laminating and embossing line which is able to deliver a customizable sheet product, following the needs of the client. A remarkable advantage of the invention is that the lacquering process and, if provided, the application of the primer and application of the coating film, are performed directly within the production process without the need to transfer the product to separate machines. The drawbacks of such transfer are eliminated. For example a line according to the invention may perform steps that, in the prior art, are normally performed in at least three separate machines. One of the advantages of performing the entire production process in a single line is much less waste product.

### Description of the invention

The invention is now described in a greater detail.

The unwinding section includes unwinders for a plurality of component sheets to be laminated one above the other into a sheet product. The term sheet product denotes the product including two or more layers, wherein each layer is formed by one of the component sheets fed from the unwinders. Typically, a sheet product of interest may comprise a base layer, a printed film and a cover layer in this order, from bottom to top. In some embodiments the cover layer is a transparent film printed on the inner surface, so that the print remains visible although not directly exposed. The intermediate layer, in some embodiments, may be a colour sheet. The visual appearance may be a combination of the colour of the intermediate layer and print made on a transparent top layer.

The top sheet may be deviated to the lacquering section before it is laminated with other layers to form the sheet product for embossing. Lacquering may be provided to give an additional protection to the top surface of the sheet product and/or to provide a desired finish.

The lacquering section in a preferred embodiment includes a rotative lacquer application group. Such lacquer application group may include a tray for containing a liquid lacquer. Said group may further include a pair of rotating cylinder arranged to apply the lacquer on a surface of the top sheet.

Particularly, a first rotating cylinder is placed above said tray and has a lower portion extending into the tray so that, when the tray is suitably filled with the liquid lacquer, the lower portion of the cylinder is immersed in the lacquer and the cylinder is able to collect the lacquer by rotation. A second rotating cylinder is opposed to said first cylinder at a close distance, thus forming a gap therebetween. In operation, a thin layer of lacquer adhere to the surface of the first cylinder and is applied to the sheet passing through the gap. A suitable blade can be provided to scrape excess lacquer off the surface of the first cylinder.

Said first cylinder and second cylinder may be arranged to rotate in the same sense or to counter-rotate according to different embodiments.

The lacquer is preferably a water-based lacquer.

The lacquering section may further include a curing section downstream the lacquer application group. In the curing section, a polymerisation (curing) of the lacquer is performed. The curing step is performed preferably by exposing the lacquered sheet product to ultraviolet (UV) rays. Accordingly the line of the invention may include at least one suitable UV-emitter. After said step of curing, the lacquer is fixed onto the surface of the top sheet and the top sheet can be laminated to the other component sheets.

In another interesting embodiment, a line according to the invention may comprise a section for the application of a primer, such as a primer to facilitate adhesion of the sheet product to a surface. Said primer application section is downstream the embossing section and is configured to apply said primer on the reverse surface of the sheet product after embossing.

The application of an adhesion primer is of great interest, for example, when the sheet product is intended for covering medium-density fireboard (MDF) panels or the like. In such case, the sheet product must provide strong and durable adhesion to the underlying panel and the application of said adhesion primer is quite advantageous. In use, said adhesion primer improves the performance of an adhesive used to bond the sheet product to a surface.

Said primer application section may further include a drying section for drying of the primer after its application on the reverse surface of the sheet product.

In another embodiment of the invention, the laminating and embossing line may include a section for the application of a protective film on top of the embossed sheet product. The application of a protective film is advantageous to protect the top surface of the product from damage, e.g. from scratches. It should be noted the top face is the valuable surface of the product, as it carries the embossed surface and makes the underlying print visible. A damage of the top surface may compromise the overall quality and should be avoided.

The protective film has preferably a suitable adhesive on the inner surface for contact with the sheet product. Said adhesive provides easy application on the sheet product and at the same time is easy removable by the user during installation of the finished sheet product, e.g. on a piece of furniture.

Said section for application of the protective film is preferably downstream of the above described section for the application of a primer.

In a particularly preferred embodiment a laminating and embossing line may include all the above described sections. Hence the top sheet is lacquered, then laminated to two or more other sheets to form a sheet product; the so obtained sheet product is embossed in register; after embossing a primer is applied on the reverse surface of the embossed sheet product; after application of the primer a protective film is applied over the top surface of the product. All the above steps are performed in-line and continuously.

A line according to the invention may include direction means configurable to selectively direct the top sheet to said lacquering section or to send said top sheet directly to the laminating section, bypassing the lacquering section. Hence the line can be configurable for optionally applying the lacquer when required.

Also the primer application section and the protective film application section may be arranged for optional use when required. Hence the line can be fully configurable according to the request of the client.

A line according to the invention may further comprise an end section where the finished sheet product is collected. In an embodiment, said end section includes a product winder wherein the finished sheet product is wound to form reels. In an alternative embodiment, said end section may include a cutting group wherein the sheet product is cut into sheets of a predetermined size, e.g. rectangular sheet. In general, reels may be preferred for their compactness and because the product is stored rapidly and continuously. However cutting the product into sheets may be preferred in some cases to avoid bending of the product.

The term finished sheet product denotes the sheet product after embossing and after the optional steps of application of the adhesion primer and/or of the protective coating film.

The embossing section may be realized according to known art and needs not be described in detail for the understanding of the present invention. The embossing technique may be selected depending on the properties of the sheet product, particularly on whether the product is substantially rigid or extensible. Various techniques for embossing in register may be incorporated in a line of the present invention. Very preferably, the embossing is performed according to patented techniques described in the above mentioned patents EP 2 447 064 and EP 2 636 524.

Generally speaking the in-register embossing is based on detecting an offset error in the angular position of the engraved cylinder relative to the print on the running sheet product, and performing a suitable correction. The error can be detected by sensing the angular position of the engraved cylinder and by detecting suitable reference marks of the product. Said reference marks for example can be optically read. The error may be corrected by acting on the cylinder or by a controlled stretching the sheet product when possible.

For example, in an exemplary embodiment the embossing section comprises at least one sensor to detect the position of the engraved cylinder and at least one sensor to detect reference marks on the sheet product, and an adjustment system configured to adjust the position of the engraved cylinder relative to the sheet product on the basis of signals provided by said sensors.

In another exemplary embodiment the embossing section comprises means to provide a controlled elongation of the sheet product, wherein the magnitude of the controlled elongation is determined to maintain a registered condition between the engraved cylinder and the sheet product. The controlled elongation may be performed while the sheet product is in a heated state which facilitates its plastic deformation.

In some embodiments the engraved cylinder may create a reference mark on the sheet product and detecting (e.g. optically reading) the position of the mark relative to the print gives the position error (offset) of the cylinder.

It should be noted that the terms upstream and downstream, or before/after, refer to the sequence according to which the various steps of the manufacturing process are performed.

It is disclosed also a process for the continuous production of an embossed-in register (EIR) sheet product in a laminating and embossing line, the process comprising:
unwinding a plurality of component sheets from respective reels, including at least a bottom sheet and a top sheet, and optionally one or more intermediate sheets,
laminating said component sheets to form a sheet product,
performing a continuous in-register embossing on said sheet product, by passing through a gap between an embossing cylinder and a counter-cylinder;
the process further comprising the step of a applying a lacquer on said top sheet, by passing said top sheet through a gap between a lacquering cylinder and a counter cylinder, the lacquering process being performed before the top sheet is laminated to other sheets to form said sheet product.

The process may be performed in a laminating and embossing line according to the various embodiments herein described. Particularly, the process may include the application of a primer and/or application of a top protective film as above described.

### Description of the figures

The invention is now elucidated with reference to the figures, wherein:
Fig. 1 is a simplified scheme of a laminating and embossing line for production of an embossed sheet product, according to a first embodiment of the invention.
Fig. 2 is a detail of the lacquering section of the laminating and embossing line of
Fig. 1.

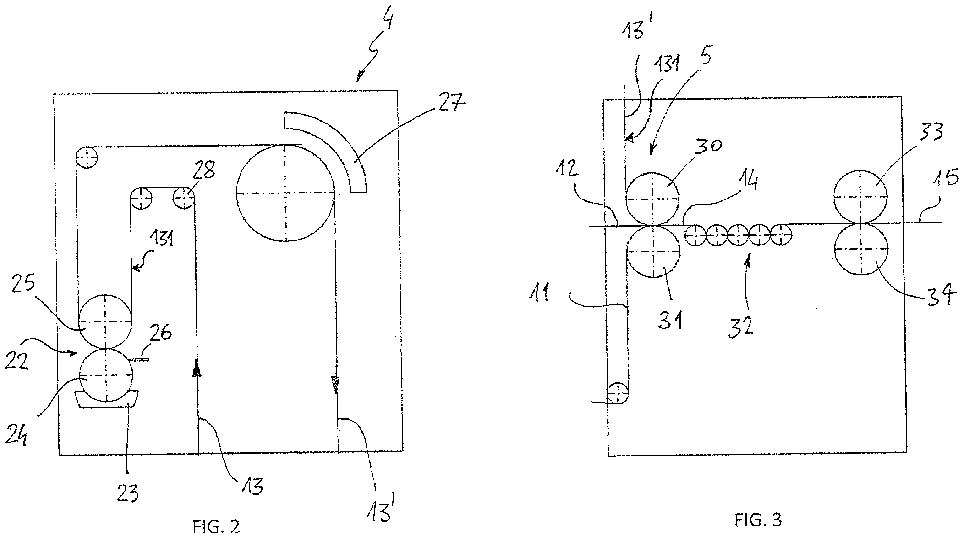

Fig. 3 is a detail of the embossing section.

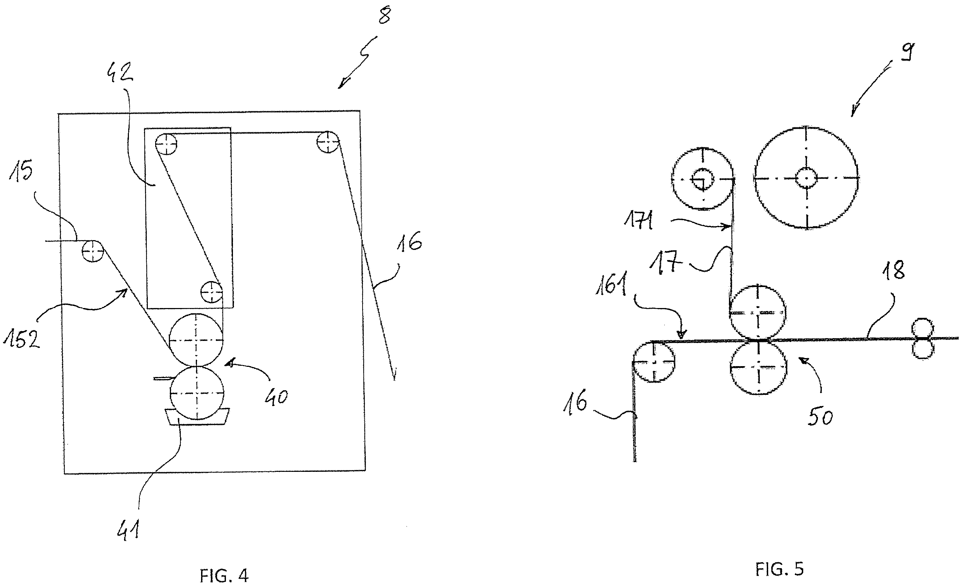

Fig. 4 is a detail of the adhesion primer application section.
Fig. 5 is a detail of the top film application section.

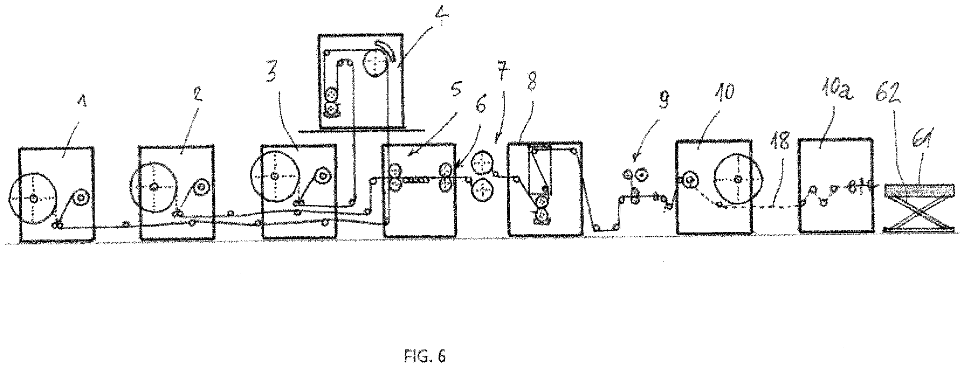

Fig. 6 is a scheme of a line according to a second embodiment of the invention.

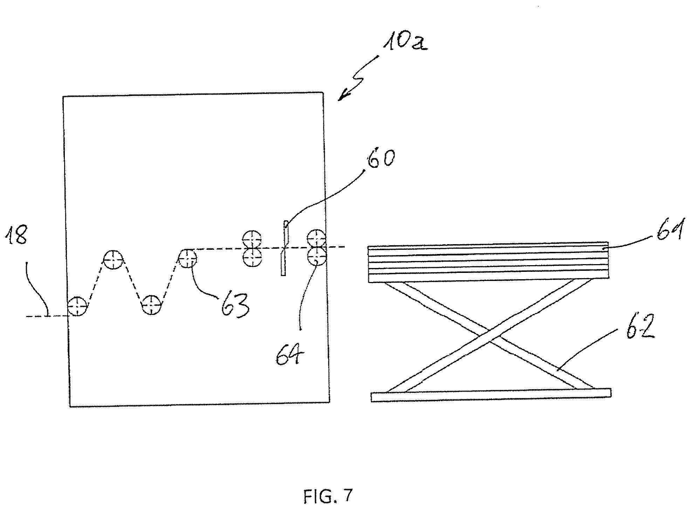

Fig. 7 is a detail of the end section of the line of Fig.6.

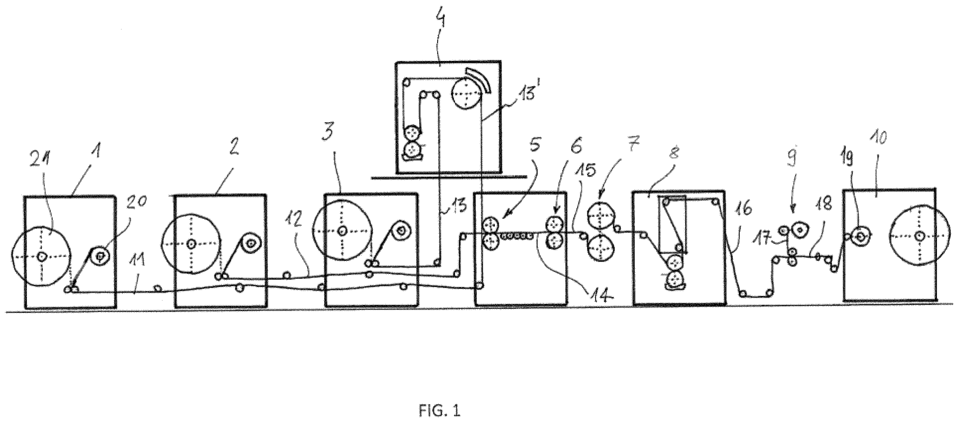

Fig. 1 illustrates the following main items:
- 1: Unwinder of the bottom sheet 11
- 2: unwinder of the centre sheet 12
- 3: unwinder of the top sheet 13
- 4: lacquering section
- 5: laminating section
- 6: embossing section
- 7: cooling section
- 8: primer application section
- 9: protective coating film application section
- 10: winding group of the finished product
- 11: bottom sheet
- 12: centre sheet
- 13: top sheet
- 13': lacquered top sheet
- 14: product sheet before embossing, formed by the bottom sheet 11, the intermediate sheet 12 and the lacquered top sheet 13'.
- 15: embossed product sheet
- 16: product sheet with adhesion primer
- 17: protective coating film
- 18: finished sheet product coated with protective film 17
- 19: storage reel

Each of the unwinders 1, 2 and 3 has a source reel and a spare reel ready for change. For example the unwinder 1 has a source reel 20 and a spare reel 21.

The sheets 11, 12 and 13 are intended to form a 3-layer product sheet which is embossed in the section 6. Before being laminated with the other sheets, the top sheet 13 is sent to the lacquering group 4 where a lacquer is applied on the top surface of said sheet 13.

For example the bottom sheet 11 is a colour PVC sheet; the centre sheet 12 is a colour PVC sheet; the top sheet 13 is a reverse printed transparent PVC sheet. In other embodiment the print can be made on the centre sheet 12.

A preferred embodiment of the lacquering group 4 is illustrated in Fig. 2. The lacquering group 4 includes:
- 22: lacquering unit
- 23: tray for the liquid lacquer
- 24: lacquering cylinder of the unit 22
- 25: counter cylinder of the unit 22
- 26: blade to remove excess lacquer from the lacquering cylinder 24
- 27: UV lamp for curing
- 28: guide cylinders

The top sheet 13 is guided through a small gap between the lacquering cylinder 24 and the counter cylinder 25. The lacquering cylinder 24 is partially immersed in the tray 23 so that, when in rotation, said cylinder 24 draws some lacquer from the tray, forming a layer over the surface of the cylinder. The blade 26 removes any excess lacquer from the surface of the cylinder 24 and the excess lacquer falls back into the tray.

The top sheet 13 is directed into the gap with the top surface 131 facing the lacquering cylinder 24, so that lacquer is applied over said top surface 131.

It can be noted that the rotation of the counter-cylinder 25 is dictated by the direction of transport of the sheet, e.g. clockwise in Fig. 2. The lacquering cylinder 24 may rotate in the same sense as the counter cylinder 25 or in the contrary sense, allowing forward application or reverse application of the lacquer.

In the example of Fig. 2, the lacquering cylinder 24 rotates counter-clockwise for forward application, so that the lacquer is collected on the right side of the cylinder where the blade 26 is mounted. To allow reverse application, another blade may be provided on the left side of the cylinder 24.

The lacquering cylinder 24 may have a suitable surface pattern to enhance the application of the lacquer. The counter-cylinder 25 preferably has an elastomer coating.

The tray 21 is connected to a suitable tank of the liquid lacquer, not shown and may be equipped with suitable means to maintain a controlled level of the lacquer.

Downstream the lacquering unit 22, the top surface 131 is exposed to the UV lamp 27 for polymerization of the lacquer. The lacquered sheet 13' leaves the section 4 and is directed towards the laminating section 5 where it is laminated with the sheets 11 and 12.

The lamp 27 is preferably an excimer lamp.

Preferably the sections are arranged in a line, apart from the lacquering section 4 which is located above the others, as illustrated. However other arrangements are possible within the invention.

Fig. 3 illustrates the laminating section 5 and the embossing section 6. In the laminating section 5, the lacquered top sheet 13' from the section 4 is laminated to the sheets 11 and 12 by a pair of counter-rollers 30, 31, to form a sheet product 14.

Before entering the laminating section 5, the sheets may be properly aligned to each other in the direction transversal to the main transport direction. Alignment of the sheets 11 and 12 can be performed by adjusting the position of the unwinders 1 and 2. Alignment of the top sheet 13 may be performed by adjusting the position of the lacquering section 4.

The sheet product 14 passes around multiple small cylinders in a heating section 32. Said heating section 32 brings the sheet product to a suitable temperature for the embossing process. The cylinders of said section 32 may have a variable speed to induce a controlled stretching of the product 14. The controlled stretching is calculated to maintain synchronism with the embossing process and provide the required embossing in register. The controlled stretching may be calculated on the basis of a detected offset error, e.g. by sensors detecting the position of the embossing cylinder and the position of reference marks printed on the sheet.

The sheet product 14, possibly stretched, is passed in a gap between an embossing cylinder 33 and a counter-cylinder or pressure cylinder 34. The embossing cylinder 33 has a suitably engraved surface to impress a desired embossing on the sheet product 14. The embossed pattern matches the print provided on the sheet 12.

The embossed product 15 is allowed to cool in the section 7 and is guided to the primer application section 8 (Fig. 4). Here, the reverse side 152 of the product 15 receives an adhesion primer. The application of the adhesion primer is performed with a pair of cylinders 40 wherein the bottom cylinder draws the liquid primer from a tray 41. The principle of operation is similar to the lacquering unit 22 described above. The adhesion primer is preferably forward-applied, namely the two cylinders are counter-rotating.

After application of the adhesion primer, the product is dried in a suitable oven 42.

The so obtained sheet product 16 is guided to the following section 9 wherein the protective film 17 is applied on the top surface 161, which is the embossed surface of the product, by means of a pair of laminating rolls 50. The so obtained finished sheet product 18, coated with the film 17, is collected in the section 10. When full, the reel can be removed and sent to storage.

The film 17 is preferably made of PE. A suitable thickness of the film 17 is, for example, 50 microns. The film 17 has a suitable adhesive on its inner surface 171.

The line can be configured to apply optionally each of the lacquer, the adhesion primer and the protective film. Hence the product can be customized.

Figs. 6 and 7 illustrate a second embodiment wherein the finished sheet product 18 is cut into individual sheets in a suitable end-of-line section 10a.

Said end-of-line section 10a is illustrated in Fig. 7 and comprises cutting blades 60 configured to cut individual sheets 61 of a predetermined shape and size from the sheet product 18. The product is guided to the cutting blades 60 by suitable guide rollers 63. After cutting, the sheets 61 are released by output rollers 64 and stacked on a magazine 62.

In the shown embodiment, the end-of-line cutting section 10a is arranged downstream the winding section 10 previously described. The product 18, instead of being wound into reels, traverses the section 10 and is fed to the cutting section 10a. This embodiment may be applied when winding the product into rolls is not desired.

The invention meets the above mentioned goals because the line is highly flexible and all steps are performed continuously in a laminating process, without intermittent or batch steps which would slow down the entire process.

## Claims

1. A laminating and embossing line for the production of an embossed-in register (EIR) sheet product with a continuous process, the line comprising:
- an unwinding section, including unwinders (1-3) for a plurality of component sheets (11-13) to be laminated one above the other into said sheet product, said component sheets including at least a bottom sheet (11) and a top sheet (13), and optionally one or more intermediate sheets (12),
- a laminating section (5) configured to laminate said component sheets to form a sheet product (14),
- a continuous in-register embossing section (6) arranged downstream said laminating section and including at least one embossing cylinder, said section being configured to provide a registered embossing on said sheet product passing through a gap between said embossing cylinder and a counter-cylinder;
and further comprising:
a lacquering section (4) which is arranged in-line upstream said laminating section, and is configured to apply a lacquer on said top sheet (13) before it is laminated to other sheets to form said sheet product.

2. A line according to claim 1 wherein said lacquering section (4) includes a lacquer application group (22) including: a tray (23) for a liquid lacquer; a first rotating cylinder (24) which is placed above said tray and has a lower portion into the tray to collect lacquer from the tray by rotation; a second rotating cylinder (25) opposed to said first cylinder at a close distance, thus forming a gap therebetween, wherein said first cylinder and second cylinder rotate in the same sense or are counter-rotating, wherein the section is configured to guide said top sheet (13) through said gap, oriented with a top surface (131) facing the first cylinder.

3. A line according to claim 2 wherein said lacquering section further includes a polymerization section downstream the lacquer application group (22).

4. A line according to claim 3 wherein said polymerization section includes at least one UV-emitter (27) and is arranged to expose the lacquered surface of the sheet to said UV-emitter.

5. A line according to any of the previous claims including direction means configurable to selectively direct the top sheet to said lacquering section or to send said top sheet directly to the laminating section bypassing the lacquering section.

6. A line according to any of the previous claims, further comprising:
a section (8) for the application of a primer, such as an adhesion primer to facilitate adhesion of the sheet product to a surface, said section (8) being downstream the embossing section (6) and being configured to apply said primer on the reverse surface (152) of the sheet product (15).

7. A line according to claim 6, wherein said primer application section (8) is configured to apply a liquid primer on the reverse surface of the sheet product, including a tray (41) of the liquid primer and a pair of opposed rotating cylinders (40), said pair including a cylinder with a lower portion into the tray to collect the liquid primer and a counter-cylinder, wherein the sheet product is passed in a gap between said cylinders.

8. A line according to claim 6 or 7, wherein said primer application section (8) includes a drying section (42) for drying of the primer after its application on the sheet product.

9. A line according to any of the previous claims, further comprising a section (9) for the application of a protective film (17) on top of the embossed sheet product.

10. A line according to any of the previous claims, comprising an end section (10, 10a) wherein the finished sheet product (18) is collected, said section including:
a winding group wherein the finished sheet product (18) is wound into reels (19), and/or
a cutting group wherein the finished sheet product (18) is cut into sheets (61) of a predetermined size.

11. A line according to any of the previous claim wherein the embossing section (6) comprises at least one sensor to detect the position of the engraved cylinder and at least one sensor to detect reference marks on the sheet product, and an adjustment system configured to adjust the position of the engraved cylinder relative to the sheet product, to maintain a registered condition, on the basis of signals provided by said sensors.

12. A line according to any of the previous claims wherein the embossing section (6) comprises means to provide a controlled elongation of the sheet product, wherein the magnitude of the controlled elongation is determined to maintain a registered condition between the engraved cylinder and the sheet product.
